# EUROPÄISCHE PATENTSCHRIFT

(11) **EP 1 016 827 B1**
(45) Veröffentlichungstag und Bekanntmachung des Hinweises auf die Patenterteilung: **06.08.2003**
(21) Anmeldenummer: 99126006.8
(22) Anmeldetag: 27.12.1999
(51) Int. Cl.: F23D 14/66, F23D 14/16

(54) **Integrierter rekuperativer Brenner**
Integrated recuperative burner
Brûleur intégré à récupération

(30) Priorität: 28.12.1998 DE 19860460
(43) Veröffentlichungstag der Anmeldung: 05.07.2000
(73) Patentinhaber: ROBERT BOSCH GMBH, 70442 Stuttgart (DE)
(72) Erfinder: Daniel, Walter, CH-3900 Brig (CH); Damson, Daniel, 71254 Ditzingen (DE); Laqua, Ekkehard, 68794 Oberhausen (DE); Volz, Wolfgang, 70193 Stuttgart (DE)

(56) Entgegenhaltungen:
- EP-A- 0 601 270
- DE-A- 19 740 625
- US-A- 4 435 153
- US-A- 4 707 341
- PATENT ABSTRACTS OF JAPAN vol. 009, no. 268 (M-424), 25. Oktober 1985 (1985-10-25) -& JP 60 114616 A (KAWASAKI JUKOGYO KK), 21. Juni 1985 (1985-06-21)

## Beschreibung

### Stand der Technik

Die Erfindung betrifft einen rekuperativen Brenner nach der Gattung des Hauptanspruches.

Derartige Brenner, insbesondere zur Verwendung als Strahlungsbrenner, sind dadurch gekennzeichnet, daß sie einen Großteil der erzeugten Wärme durch Strahlung übertragen. Sie werden beispielsweise zur Beheizung von Produktionshallen eingesetzt. In der Regel wird dabei ein Brennstoff-Luftgemisch vorgemischt und in einer oberflächennahen Reaktionszone verbrannt. Durch Wärmeübertragung mittels Strahlung kann Energie nahezu verlustfrei übertragen werden. Da die emittierte Strahlung proportional zur vierten Potenz der Oberflächentemperatur des Brenners in der Reaktionszone ist, ist die Strahlertemperatur der entscheidende Parameter dafür, welche Wärmeleistung der Brenner abgibt.

Bei bekannten Brennern und insbesondere Strahlungsbrennern verlassen die Abgase das System vielfach mit einer Abgastemperatur, die ähnlich hoch wie die Temperatur in der Brennkammer des Brenners ist, so daß die im Abgas enthaltene erhebliche Energiemenge verloren geht.

Das Konzept eines rekuperativen Brenners sieht vor, daß die im Abgasstrom enthaltene Energie weitgehend rückgewonnen und ebenfalls in Energie umgewandelt wird. Dies erfolgt, indem die Abgasenergie dem zugeführten Frischgas nach dem Prinzip eines Gegenstromwärmetauschers zugeführt wird. Mit diesem Gegenstromwärmetauscher kann so die Endtemperatur des vorgemischten Brenngases weit über die Abgasaustrittstemperatur gesteigert werden.

Ein rekuperativer Brenner für den Einsatz bei Temperaturen oberhalb 1100°C in Form eines Strahlungsbrenners ist aus A. Wünning und G. Wünning, Gas wärme international, Band 45, (1996), Heft 6, Seiten 271-275 bekannt. Darin wird ein Brenner mit einem keramischen Strahlrohr aus einem SiC-Werkstoff beschrieben, das aus einem einseitig geschlossenen Außen- und einem Innenrohr besteht, wobei der Brennstoff über das Innenrohr geführt und die Abgase über das Außenrohr zum Brenner zurückgeführt werden, wo sie im Gegenstrom zur Verbrennungsluft ihre Wärme abgeben. Derartige Brenner eignen sich für Betriebstemperaturen bis 1250°C im Dauerbetrieb während rekuperative Strahlungsbrenner mit metallischen Werkstoffen in der Regel nur bis ca. 1100°C einsetzbar sind. Die bekannte Anordnung von zwei ineinanderliegenden Röhren im Gegenstormwärmetauscher ist jedoch nicht optimal hinsichtlich der Rückgewinnung der Abgasenergie.

Aus der JP-A 60 114 616 ist ein aus einem Wabenkörper aufgebauter Rekuperatorbrenner bekannt, bei dem eine Vielzahl von parallel verlaufenden, schachbrettartig angeordneten Gaszufuhrkanälen und Gasabfuhrkanälen vorgesehen sind. Durch die in entgegengesetzter Richtung zueinander strömenden Brenngase und Abgase in den schachbrettartig angeordneten Gaszufuhrkanälen und Gasabfuhrkanälen wird eine Vorheizung der Brenngase durch das heiße Abgas realisiert.

Ein weiterer Brenner mit einer Vorwärmung des Brenngasgemisches ist aus der US-A 4,435,153 bekannt. Das Brenngasgemisch wird durch ein Rohrbündel von Kanälen in eine Brennkammer geleitet. Die Rohrbündel sind in einem massiven Block geführt, in dem zusätzliche Heizelemente eingesetzt sind, die zur Vorwärmung des durch die Rohrbündel strömenden Brenngasgemischs dienen.

Weiterhin sind aus dem Stand der Technik keramische Wabenkörper bekannt, die eine Vielzahl von parallel verlaufenden schachbrettartig angeordneten feinen Kanälen ausweisen und die in Katalysatoren zur Abgasnachbehandlung in Kraftfahrzeugen oder Kraftwerken verwendet werden. Diese keramischen Körper haben aus Gründen einer hohen thermischen Belastbarkeit eine hohe Porosität.

Aufgabe der Erfindung ist die Herstellung eines integrierten rekuperativen Brenners, d.h. eines Brenners mit einem Gegenstromwärmetauscher für den Einsatz bei hohen Temperaturen, bei dem die Abgasenergie möglichst weitgehend auf das zugeführte Gas (Brennstoff, Luft) übertragen wird und bei dem eine möglichst vollständige Umsetzung der chemischen Energie aus den zugeführten Brennstoffen in Wärme erfolgt, so daß sich der Wirkungsgrad gegenüber bekannten Brennern erhöht.

### Vorteile der Erfindung

Der erfindungsgemäße Brenner mit den kennzeichnenden Merkmalen des Hauptanspruchs hat gegenüber dem Stand der Technik den Vorteil, daß der Brenner eine in den Brennerkörper integrierte Brennkammer aufweist und daß der Brennerkörper gleichzeitig nach dem Prinzip eines Gegenstromwärmetauschers mit Abgaswärmerückgewinnung arbeitet, so daß einerseits die Energie des durch den Brennerkörper rückgeführten Abgases weitestgehend zur Aufheizung von der Verbrennung zugeführter Luft oder zugeführten Brennstoffen oder zugeführten Brennstoff-Luftgemisch verwendet wird.

Durch dieses Konstruktionsprinzip kann weiterhin sehr vorteilhaft die erzeugte Wärme als Wärmestrahlung auf einem sehr hohen Temperaturniveau ausgekoppelt werden, so daß sich der erfindungsgemäße Brenner besonders auch als Strahlungsbrenner eignet.

Weiterhin ist die Bauweise des erfindungsgemäßen integrierten Brenners sehr kompakt und einfach zu realisieren. Sie vermeidet Bauteile, die zu einen Energieverlust führen können. Außerdem ist sehr vorteilhaft, daß die Gaszufuhrkanäle für Frischgase (Luft, Brennstoff oder ein Brennstoff-Luft-Gemisch) und die Abgasabfuhrkanäle innerhalb des Brennerkörpers angeordnet sind, so daß ein besonders effektiver und vollständiger Wärmeaustausch zwischen Abgas und Frischgasen stattfindet. Die Frischgase werden dazu sehr vorteilhaft zunächst durch den Brennerkörper geleitet und dabei mit zunehmender Nähe zur Brennkammer immer weiter vorgewärmt, während die in der Brennkammer entstehenden Abgase durch den Brennerkörper zurückströmen und erst nach Verlassen des Brennerkörpers, weitgehend oder teilweise weitgehend bereits abgekühlt, abgeführt werden.

Durch die Anordnung von parallel verlaufenden Kanälen, von denen jeweils eine Zeile benachbarter Kanäle als Gaszufuhrkanäle eingesetzt werden und ebenso eine Zeile benachbarter Kanäle als Abgasabfuhrkanäle ausgebildet sind, lässt sich vorteilhaft eine Abfolge von Zeilen von abwechselnd als Gaszufuhrzeilen geschalteten Gaszufuhrkanälen und als Abgasabfuhrzeilen geschalteten Abgasabfuhrkanälen realisieren, wobei sich ein optimaler Wärmeaustausch zwischen zugeführten Gasen und den Abgasen ergibt und gleichzeitig die Zuordnung der Kanalfunktion auf der kalten Seite des Brennerkörpers nicht für jeden Kanal separat erfolgen muss, sondern lediglich zeilenweise. Dies vereinfacht die definierte Gaszuführung und Gasabfuhr aus den jeweiligen Kanälen erheblich.

Der erfindungsgemäße Brenner läßt sich sowohl durch Verwendung eines metallischen Brennerkörpers realisieren, als auch durch einen keramischen Brennerkörper. Ein keramischer Brennerkörper hat jedoch den großen Vorteil, daß er zunächst wesentlich höhere Temperaturen in der Brennkammer und des die Brennkammer umgebenden Bereiches des Brennerkörpers zuläßt, die auch im Dauerbetrieb oberhalb von 1100°C (bis zu 1700°C) liegen können. Somit bietet der erfindungsgemäße Brenner insbesondere mit einem keramischen Brennerkörper bei Betrieb als Strahlungsbrenner den Vorteil, einer sehr hohen Wärmeabstrahlung gegenüber kälteren, beispielsweise metallischen Strahlungsbrennern.

Als keramischer Brennerkörper eignet sich sehr vorteilhaft ein keramischer Wabenkörper, wie er beispielsweise hinsichtlich seiner Geometrie aus Katalysatoren von Kraftfahrzeugen bekannt ist. Derartige Körper werden in an sich bekannter Technologie hergestellt, sind sehr temperaturstabil und kommerziell verfügbar. Gleichzeitig verfügen sie über eine Vielzahl von schachbrettartig angeordneten, innerhalb des keramischen Wabenkörpers verlaufenden parallelen Kanälen, die sich bei Verwendung des Wabenkörpers als Brennerkörper sehr vorteilhaft als Gaszufuhr- und Gasabfuhrkanäle eignen. Dazu benötigt man auf der kalten Seite des Brenners lediglich eine geeignete Maske zur definierten Gaszufuhr zu den einzelnen Kanälen oder eine Anordnung von Brennstoff- und Luftzuführungen, so daß vordefinierte Kanäle innerhalb des Brennerkörpers als Gaszufuhrkanäle und andere, ebenfalls vordefinierte Kanäle, als Abgasabfuhrkanäle eingesetzt werden, wobei gleichzeitig sehr vorteilhaft gewährleistet ist, daß keine oder nur eine geringe Vermischung von Brennstoffen mit Abgasen stattfindet und möglichst wenig Brennstoffe oder Brenngase unverbrannt ins Abgas gelangen.

Vorteilhafte Weiterbildungen der Erfindung ergeben sich aus den in den Unteransprüchen genannten Maßnahmen.

So ist es sehr vorteilhaft möglich, daß bevor die Brennstoffe in die Brennkammer gelangen, diese zunächst unterhalb des Brennerkörpers auf dessen kalter Seite in einer Mischkammer mit ebenfalls in die Mischkammer zugeführter Luft vermischt werden. Damit erreicht man eine Homogenisierung des Brennstoff-Luft-Gemisches und eine optimales Mischungsverhältnis von Brennstoffen zu Luft, bevor dieses im weiteren durch den Brennerkörper geleitet und schließlich vorgewärmt in die Brennkammer gelangt.

Besonders vorteilhaft.ist eine quadratische oder rechteckige Grundfläche der Stirnseite des Brennerkörpers mit innerhalb des Brennerkörpers verlaufenden im Querschnitt quadratischen oder rechteckigen Kanälen, die, lediglich durch dünne Wände zum besseren Wärmeaustausch voneinander getrennt, unmittelbar benachbart sind.

Weiterhin ist es mit dem erfindungsgemäßen Brenner sehr vorteilhaft möglich, sofern beispielsweise eine Vormischung von Luft und Brennstoff in der Mischkammer nicht zweckmäßig ist, die innerhalb des Brennerkörpers liegenden Kanäle in Brennstoffzufuhrkanäle, Luftzufuhrkanäle und Abgasabfuhrkanäle aufzuteilen und diese wiederum in nebeneinanderliegende Brennstoffzufuhrzeilen, Luftzufuhrzeilen und Abgasabfuhrzeilen zusammenzufassen, so daß sich eine definierte Abfolge dieser Zeilen innerhalb des Brennerkörpers ergibt. Dadurch findet bei separater Zuführung von Luft und Brennstoff zu den jeweiligen Zufuhrkanälen eine Vermischung von Luft und Brennstoff erst in der Brennkammer statt.

Da beispielsweise keramische Brennerkörper, um die innerhalb des Brennerkörpers bei Betrieb auftretenden erheblichen mechanischen Spannungen aufgrund des zwischen kalter Seite des Brennerkörpers und dem Bereich der Brennkammer bestehenden erheblichen Temperaturgradienten von häufig über 1000°C aushalten oder kompensieren zu können, vorteilhaft aus einem zumindest im Bereich der Brennkammer porösen Material ausgebildet sind, hat diese Realisierung der Gasströme innerhalb des Brennerkörpers den weiteren Vorteil, daß damit, trotz der zumindest bereichsweise porösen und damit gasdurchlässigen Struktur des Brennerkörpers, eine Vermischung von Brennstoffen und Abgasen weitgehend vermieden wird. Dies wird sehr vorteilhaft dadurch erreicht, daß die in Form von Abgaszeilen angeordneten Abgaskanäle jeweils zwischen zwei Luftzufuhrzeilen eingeschlossen sind, wobei die Luftzufuhrzeilen selbst wiederum in Form von Brenstoffzufuhrzeilen geschaltete Brenstoffzufuhrkanäle einschließen. Damit hat man also, abgesehen von den Randbereichen des Brennerkörpers, die vorteilhaft mit einer Luftzufuhrzeile oder einer Abgasabfuhrzeile abschließen, beispielsweise eine sehr vorteilhafte periodische Zeilenabfolge von Luftzufuhrzeile, Brennstoffzufuhrzeile, Luftzufuhrzeile und Abgasabfuhrzeile. Damit wird erreicht, daß selbst bei einem porösen Brennerkörper die der Verbrennung zugeführte Luft lediglich zu einem kleinen Teil in die Abgaskanäle übertritt, was insgesamt nur einen geringfügigen Verlust an Verbrennungsluft ergibt. Insbesondere wird somit erreicht, daß die Brenstoffzufuhrkanäle nur Luftzufuhrkanäle als Nachbarn haben und somit ein Übertritt von Brennstoff in die Luftzufuhrkanäle nicht zu einem Brennstoffverlust führt, sondern lediglich zu einer eher vorteilhaften Vormischung von Luft und Brennstoff. Die zugeführte Menge an Luft oder Brennstoffen läßt sich bei dieser Gasführung weiterhin sehr einfach in bekannter Weise über die jeweiligen Gasdrücke in den Gaszufuhrzeilen gleicher Funktion einstellen. In besonders vorteilhafter Ausgestaltung der Erfindung ist der Druck in den Luftzuführungskanälen im übrigen höher als in den Abgasabfuhrkanälen und den Brennstoffzufuhrkanälen, so daß eine Diffusion oder ein Übertritt von Brennstoff aus den Brennstoffzufuhr Kanälen in die Luftzuführungskanäle aufgrund des zu entgegengerichteten Druckgradienten vernachlässigbar ist.

Verwendet man dagegen eine Vormischung von Luft und Brennstoff in der Mischkammer und führt diese Brennstoff-Luft-Mischung über die innerhalb der Brennerkörpers in diesem Fall als Gaszufuhrkanäle und Abgasabzufuhrkanäle in abwechselnden Zeilen geschalteten Kanäle innerhalb des Brennerkörpers zu der Brennkammer, tritt im Fall eines zumindest bereichsweise porösen, beispielsweise keramischen Brennerkörpers, ein Verlust von Brennstoff auf, da dieser teilweise unverbrannt in die Abgaskanäle übertritt, was auch weitere verfahrenstechnische Schwierigkeiten aufwirft (Einhaltung der Explosionsgrenzwerte, Beschränkung des heißen Bereiches des Brenner auf die Umgebung der Brennkammer, Vermeidung von unkontrollierten Verbrennungsvorgängen innerhalb des Brennerkörpers). Insofern ist diese Gasführung mit einem zugeführten Brennstoff-Luft-Gemisch eher im Fall eines weitgehend gasdichten Brennerkörpers vorzuziehen, während die Gasführung über separate Luft- und Brennstoffkanäle innerhalb des Brennerkörpers entsprechend den vorangehenden Ausführungen sich besonders für poröse Brennerkörper eignet.

Um zu vermeiden, daß sich die über die Abgaskanäle abgeführten Abgase mit der zugeführten Luft und/oder Brennstoffen vermischen, ist es weiter sehr vorteilhaft, wenn die Enden der Abgaskanäle innerhalb des Brennerkörpers auf dessen kalter Seite oberflächlich verschlossen sind. Dies wird dadurch realisiert, daß zunächst benachbarte Abgaskanäle, wie zuvor ausgeführt, zu Abgasabfuhrzeilen zusammengefaßt werden. Der Brennerkörper wird dann auf dessen kalter Seite in den Zeilen, in denen die Abgasabfuhrkanäle liegen beispielsweise mit ausgesägten Schlitzen versehen, so daß die Abgasabfuhrkanäle etwas zurückversetzt gegenüber den Gaszufuhrkanälen innerhalb des Brennerkörpers enden. Anschließend werden dann die erzeugten Schlitze an der Oberfläche der kalten Seite des Brennerkörpers wieder verschlossen, indem man beispielsweise eine entsprechende Maske auf dieser Seite des Brennerkörpers aufsetzt, die diese Schlitze abdeckt, die Schlitze oberflächlich wieder zuschweißt oder im Fall eines keramischen Brennerkörpers beispielsweise oberflächlich einen keramischen Schlicker oder eine keramische Paste in die erzeugten Schlitzzwischenräume aufbringt und den so präparierten Brennerkörper erneut sintert, so daß die Abgaszufuhrzeilen auf der kalten Seite des Brennerkörpers oberflächlich über Abgaskanalverschlüsse gasdicht verschlossen sind, darunter jedoch ein zeilenartiger Hohlraum verbleiben ist, der die einzelnen Abgasabfuhrkanäle miteinander verbindet, so daß die rückgeführten Abgase aus den Abgaskanälen über in dem Brennerkörper seitlich erzeugte Abgasöffnungen in eine Abgasabführung geleitet und abgeführt werden, ohne mit dem Brennstoff und/oder der Luft in Kontakt zu kommen.

Eine weitere vorteilhafte Weiterbildung der Erfindung sieht vor, daß die Abgasabfuhrkanäle so ausgebildet sind, daß diese weiter in die Brennkammer hineinragen als die Gaszufuhrkanäle. Diese Anordnung ist strömungsmechanisch sehr günstig, da die zugeführten Gase dadurch nicht sofort wieder über die Abgasabfuhrkanäle abgesaugt werden, sondern zunächst in die Brennerkammer strömen, sich gegebenenfalls dort vermischen und verbrennen und erst dann in die Abgasabfuhrkanäle gelangen. Damit wird sehr vorteilhaft eine Erhöhung des Wirkungsgrades des erfindungsgemäßen Brenners und eine Minimierung eines Verlustes von unverbranntem Brennstoff erzielt sowie ein Strömungskurzschluß aus dem Flammenbereich in das Abgas vermieden. Das Hineinragen der Abgasabfuhrkanäle kann beispielsweise sehr vorteilhaft dadurch erzeugt werden, daß Schlitze in die aus Gaszufuhrkanälen bestehenden Gaszufuhrzeilen gesägt werden.

Der Brennerkörper besteht sehr vorteilhaft aus einem porösen, insbesondere keramischen Material, um auftretende mechanische Spannungen durch Temperaturgradienten innerhalb des Brennerkörpers und/oder Temperaturwechselvorgänge (Temperaturschockbeständigkeit) kompensieren zu können. Da dieser Temperaturgradient, der zwischen Brennkammer d.h. der heißen Seite des Brennerkörpers und der kalten Seite des Brennerkörpers insgesamt mehr als 1000°C betragen kann, sowie auch Temperaturwechsel und die dadurch erzeugten mechanischen Spannungen insbesondere in der Umgebung der Brennerkammer auftreten, sieht eine weitere vorteilhafte Weiterbildung der Erfindung daher vor, daß der Brennerkörper in der Umgebung der Brennerkammer hochporös ist und auf der gegenüberliegenden, kalten Seite des Brennerkörpers gasdicht ist.

Diese unterschiedliche Porosität des Brennerkörpers verbindet insbesondere die vorteilhaften mechanischen Eigenschaften einer porösen Struktur im heißen Bereich, in unmittelbarer Umgebung der Brennkammer gelegenen Teil des Brennerkörpers, in dem der auftretende Temperaturgradient besonders groß und die mechanische Beanspruchung daher am höchsten ist, mit den Vorteilen einer gasdichten Struktur des Brennerkörpers in den übrigen Bereichen hinsichtlich einer Minimierung von Gasverlusten und unerwünschten Vermischung von Gasen. Gasdichte Keramiken halten derartige hohe Temperaturgradienten von bis zu 1000°C über der Länge des Brennerkörpers in der Regel im Dauerbetrieb oder bei Ein- und Ausschaltvorgängen des Brenner nicht stand. Durch eine unterschiedliche Porosität des Brennerkörpers als Funktion des Abstandes von der Brennkammer kann der Brennerkörper somit in Bereichen, wo die auftretenden Temperaturen keine relevante mechanische Beanspruchung des Brennerkörpers bedeuten, gasdicht ausgestaltet sein, und in Bereichen mit hohem Temperaturgradienten dagegen porös sein.

Besonders vorteilhaft ist es, wenn dieser Übergang von der porösen Struktur zu einer gasdichten Struktur kontinuierlich erfolgt, indem beispielsweise gezielt über eine sich kontinuierlich sich verändernde Zusammensetzung des Brennerkörpers aus vorzugsweise einem keramischen Material mit zunehmendem Abstand von der Brennkammer die Porosität des Brennerkörpers abnimmt.

Eine unterschiedliche Porosität des Brennerkörpers kann vorteilhaft aber auch dadurch erreicht werden, indem der Brennerkörper aus mindestens zwei unterschiedlichen, insbesondere keramischen Materialien, zusammengesetzt ist, wobei sehr vorteilhaft wiederum eine Brennerkörperzusammensetzung aus einem porösen, insbesondere hochporösen Material in der Umgebung der Brennkammer mit einem gasdichten Material auf der kalten Seite des Brennkörpers kombiniert wird.

In sehr vorteilhafter Weiterbildung der Erfindung wird diese als Funktion des Abstandes von der Brennkammer abnehmende Porosität dadurch erzielt, indem sich die Zusammensetzung des Brennerkörpers kontinuierlich verändert und beispielsweise von einem ersten, vorzugsweise gasdichten keramischen Material auf der kalten Seite des Brennerkörpers kontinuierlich in ein zweites, vorzugsweise hochporöses keramisches Material in der unmittelbaren Umgebung der Brennkammer übergeht. Ein deratiger Übergang läßt sich im Fall von keramischen Brennerkörpern sehr einfach dadurch herstellen, indem man den keramischen Brennerkörper zunächst in Form eines keramischen Grünkörpers aus einem Schlicker herstellt, wobei sich die Zusammensetzung des Schlickers hinsichtlich der keramischen Bestandteile , der zugesetzten Binderanteile und Sinteradditive als Funktion des Abstandes von der Brennkammer kontinuierlich verändert, so daß sich nach dem Sintern dieses Grünkörpers der gewünschte Porositätsgradient von selbst einstellt. Ein kontinuierlicher in Übergang der Zusammensetzung hat den weiteren Vorteil, daß dieser Übergang trotz einer sich ändernden Porosität unabhängig von den thermischen Materialeigenschaften der verwendeten Materialien erfolgen kann, während bei einem abrupten Übergang von einem ersten Material zu einem zweiten Material mit unterschiedlichen Porositäten, eine Anpassung der thermischen Materialeigenschaften unerläßlich ist, was die Auswahl geeigneter Materialien erheblich beschränkt.

Eine weitere vorteilhafte Weiterbildung der Erfindung sieht vor, daß der Brennerkörper aus einem Oxid eines Seltenerdmetalles wie insbesondere Yb₂O₃ (Ytterbiumoxid) oder Er₂O₃ (Erbiumoxid) besteht oder dieses enthält. Derartige Oxide sind bekannt als frequenzselektiv strahlende Materialien d.h. sie absorbieren Strahlung eines definierten Frequenzbereiches und emittieren diese in einem anderen, definierten Frequenzbereich nach dem Prinzip eines Glühstrumpfes. Der emittierte Frequenzbereich ist dabei in der Regel schmalbandig. Somit eignet sich ein erfindungsgemäßer Brenner mit beispielsweise einem keramischen Brennerkörper, der aus diesen Seltenerdoxiden besteht oder diese enthält, beispielsweise bei Betrieb als Strahlungsbrenner, besonders auch als Energiequelle in einem thermophotovoltaischen Generator mit möglichst hohem Wirkungsgrad.

Dazu wird vorteilhaft die von der Brennkammer des Brenners ausgehende Strahlung beispielsweise über eine Quarzglasplatte als Brennkammerabdeckung ausgekoppelt und trifft auf eine an sich bekannte Photozelle oder Solarzelle, wie beispielsweise eine Siliziumsolarzelle, die oberhalb dieser Glasplatte angebracht ist. Da eine derartige Solarzelle aufgrund ihrer spektralen Empfindlichkeit nur einen Frequenzauschnitt des ihr angebotenen Strahlungsspektrums aus der Wärmestrahlung in elektrische Energie umwandelt, ist es mit Hilfe der Seltenerdoxide in dem erfindungsgemäßen Brenner sehr vorteilhaft möglich, das von dem als Strahlungsbrenner betriebenen Brenner emittierte Strahlungsspektrum an das von der Solarzelle verwendbare Frequenzspektrum optimal anzupassen. Diese Anpassung ist sehr vorteilhaft über die Auswahl des Seltenerdelementes möglich. So eignet sich Ytterbiumoxid sehr gut für eine Siliziumsolarzelle, während Erbiumoxid beispielsweise eher für eine Solarzelle auf Basis von GaSb geeignet ist. Weitere mögliche Solarzellen sind beispielsweise solche auf Basis von Ge oder InGaAs.

Da die Seltenerdoxide erheblich teurer sind als übliche Standardkeramiken für Abgaskatalysatoren oder den erfindungsgemäßen Brennerkörper, ist es insbesondere sehr vorteilhaft, wenn lediglich der die Brennkammer umgebende Bereich des Brennerkörpers das Seltenerdoxid enthält und ganz besonders bevorzugt aus diesem besteht. Somit erhält man eine sehr vorteilhafte Kombination eines Bereiches in der Umgebung der Brennerkammer, der beispielsweise aus keramischem Ytterbiumoxid besteht und der gleichzeitig hochporös ist, mit einer Zusammensetzung des übrigen Teils des Brennerkörpers, der dort aus einer gasdichten Standardkeramik besteht, wobei der Übergang beider Materialien entweder kontinuierlich oder abrupt erfolgen kann. Die Umgebung der Brennerkammer wird dadurch von den übrigen Teilen des Brennerkörpers abgegrenzt, daß in ihr zu einem sehr wesentlichen Teil die Verbrennung der zugeführten Brennstoffe und damit auch die Emission von Wärme in Form von Strahlung ausgeht. Die Ausdehnung dieses Bereiches in der Umgebung der Brennkammer ergibt sich aufgrund der Dimensionierung des Brennerkörpers und insbesondere der Drücke und Mengen der zugeführten Gases und muß daher im Einzelfall anhand einiger Vorversuche ermittelt werden.

### Zeichnung

Ausführungsbeispiele der Erfindung werden anhand der Zeichnung und in der nachfolgenden Beschreibung näher erläutert.

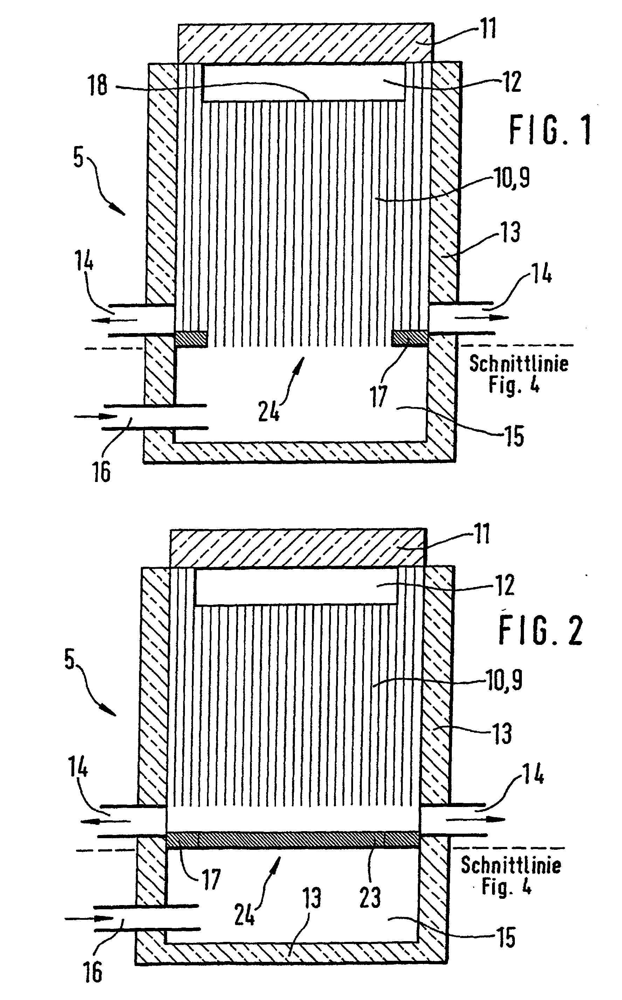

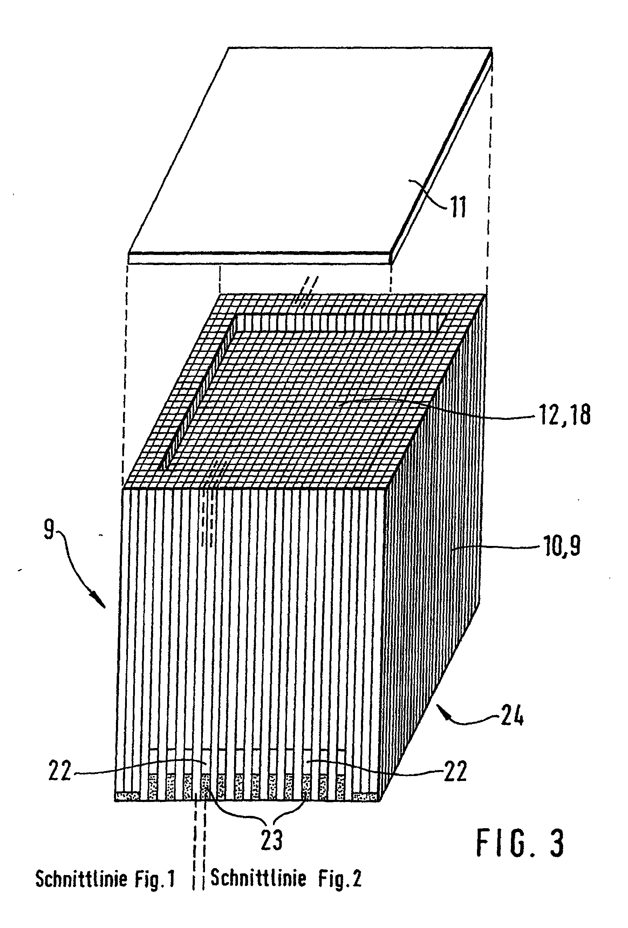

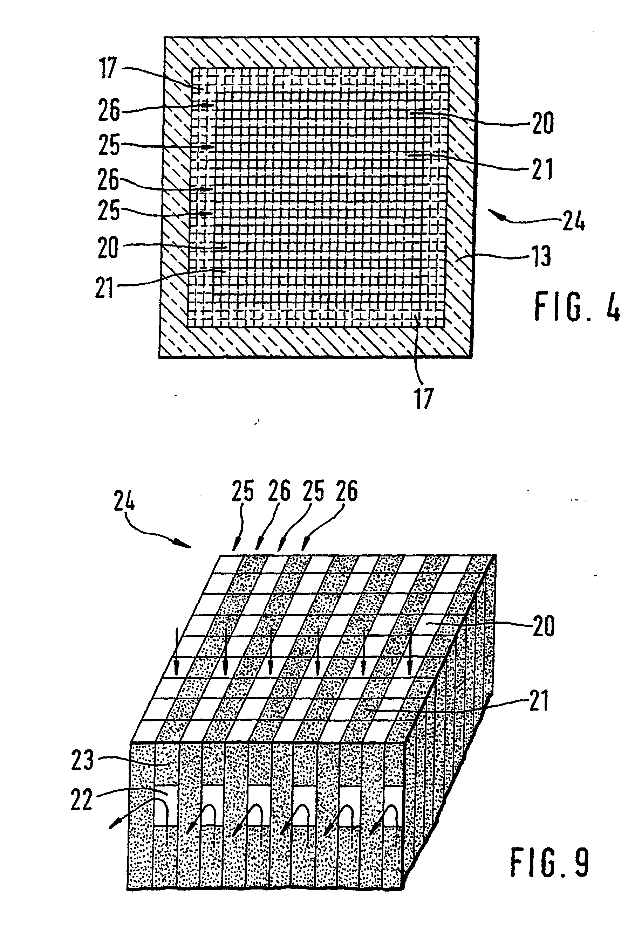

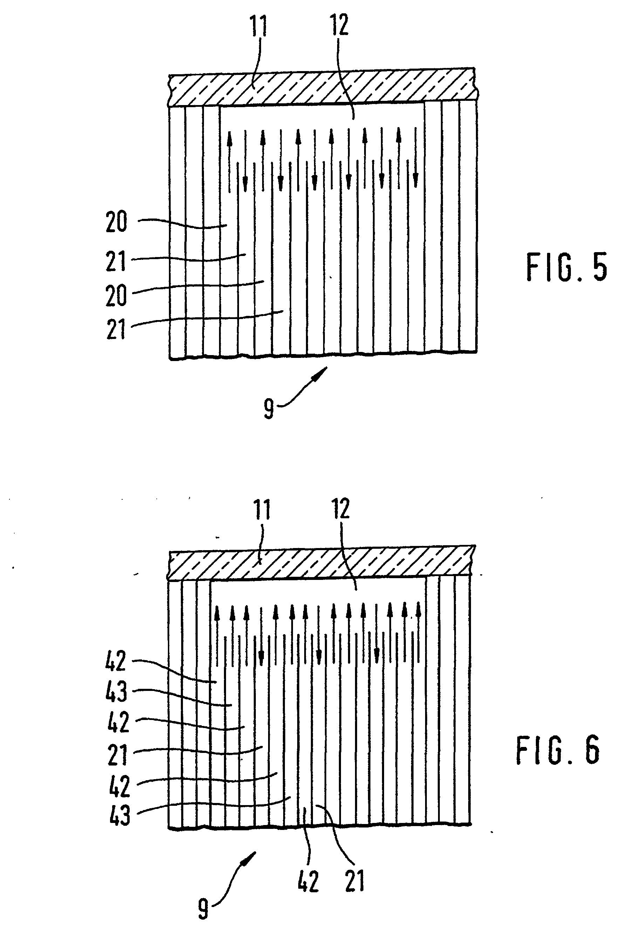

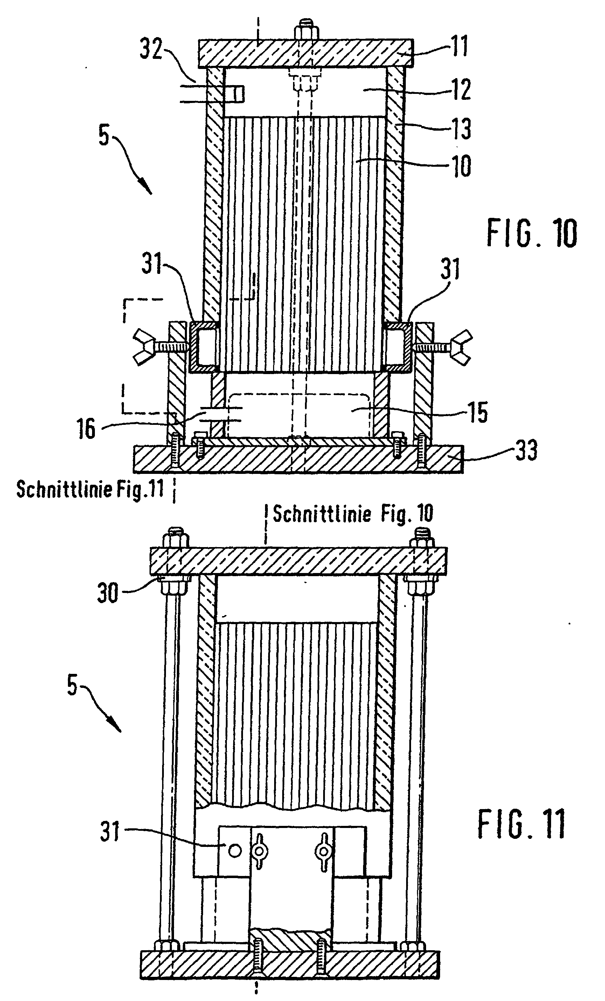

Es zeigen Figur 1 einen schematischen Schnitt durch einen erfindungsgemäßen Brenner, Figur 2 einen weiteren Schnitt durch den Brenner gemäß Figur 1 entlang einer benachbarten Schnittebene, Figur 3 eine Ansicht des Brennerkörpers aus Figur 1 und 2, wobei in Figur 1 und 2 der Schnitt durch den Brenner entlang der in Figur 3 angedeuteten benachbarten Schnittlinien erfolgte, und Figur 4 eine Draufsicht von unten entlang der in Figur 1 eingezeichneten Schnittlinie. Die Figuren 5 bis 8 erläutern verschiedene Gasführungsmöglichkeiten durch den Brennerkörper aus Figur 3. Figur 9 zeigt die Unterseite von Figur 3 perspektivisch. Die Figuren 10 und 11 zeigen eine detailliertere Prinzipskizze eines erfindungsgemäßen Brenners mit weiteren Baugruppen aus zwei zueinander senkrechten Richtungen.

### Ausführungsbeispiele

Die Figur 1 zeigt einen Schnitt durch eine Prinzipskizze eines Strahlungsbrenners 5 mit einem Brennerkörper 9 der in Form eines keramischen Wabenkörpers 10 ausgebildet ist. In den Brennerkörper 9 ist eine Brennkammer 12 mit einer Brennfläche 18, die im heißen Bereich des Brennerkörpers 9 liegt, eingelassen oder ausgefräst. Die Brennkammer 12 wird nach oben von einer Quarzglasplatte 11 abgeschlossen. Der Brennerkörper 9 ist mit einer Isolierung 13 zur Vermeidung von Wärmeverlusten versehen, wobei unterhalb des Brennerkörpers unter dessen kalter Seite 24 eine Mischkammer 15 angeordnet ist, die der Vermischung von über die Gaszuleitungen 16 zugeführten Brennstoffen und ebenfalls über die Gaszuleitungen 16 zugeführter Luft dient. Der Brennerkörper 9 ist in den Randbereichen mit Seitenkanalverschlüssen 17 versehen, die innerhalb des Brennerkörpers 9 liegende, nicht in die Brennkammer führende Kanäle verschließen. Die Abgasabfuhr durch den Brennerkörper 9 erfolgt über Abgasabfuhrkanäle aus der Brennkammer 12, die in Verbindung stehen mit der Abgasleitung 14. Aufgrund der in Figur 1 gewählten Schnittebene sind alle sichtbaren angedeuteten Kanäle innerhalb des Brennerkörpers 9 Gaszufuhrkanäle 20.

Figur 2 zeigt ebenfalls einen Schnitt durch eine Prinzipskizze eines Strahlungsbrenners 5 entsprechend Figur 1, jedoch durch eine zu der Schnittebene von Figur parallelen Schnittebene, so daß alle sichtbaren angedeuteten Kanäle innerhalb des Brennerkörpers 9 Abgasabfuhrkanäle sind. In dieser Schnittebene sind auf der kalten Seite 24 der Brennerkörper 9 die Abgasabfuhrkanäle durch einen Abgasabfuhrkanalverschluß 23 verschlossen, so daß die Abgasabfuhrkanäle keine Verbindung mit der Mischkammer 15 haben, sondern lediglich in Verbindung mit der Abgasleitung 14 stehen.

Figur 3 zeigt den Brennerkörper 9 aus Figur 1 oder 2 perspektivisch mit der Quarzglasplatte 11 und der in den Brennerkörper 9 eingelassenen Brennkammer 12. Der Brennerkörper 9 ist als rechteckiger keramischer Wabenkörper 10 mit schachbrettartige angeordneten, parallel verlaufenden Kanälen mit rechteckigem oder quadratischem Querschnitt ausgebildet ist, die unmittelbar benachbart und voneinander lediglich durch dünne Wände getrennt sind. Innerhalb des Brennerkörpers 9 sind die Abgasabfuhrkanäle 21 zu parallelen Abgasabfuhrzeilen 26 und die Gaszufuhrkanäle 20 zu parallelen Gaszufuhrzeilen 25 angeordnet, die sich periodisch abwechseln. Auf der kalten Seite 24 des Brennerkörpers 9 sind die Abgasabfuhrkanäle 21 durch eine zeilenförmige Einfräsung oder Aussparung in dem Brennerkörper 9 etwas in den Brennerkörper hineinversetzt, während die Gaszufuhrkanäle 20 durchgehend sind und auf der kalten Seite 24 des Brennerkörpers 9 enden. Um einen Übertritt von Abgases aus den Abgasabfuhrkanälen in die Mischkammer 15 zu verhindern, sind weiterhin die rückversetzten Abgasabfuhrkanäle an der Oberfläche der kalten Seite 24 des Brennerkörpers 9 mit Abgasabfuhrkanalverschlüssen versehen, die die jeweilige Abgasabfuhrzeile 26 gegen die Mischkammer 15 verschließen, so daß sich gleichzeitig innerhalb des Brennerkörpers 9 zeilenartige Hohlräume bilden, die seitlich auf beiden Seiten des Brennerkörpers 9 in Abgasöffnungen 22 münden, die mit der Abgasleitung 14 verbunden sind und damit die Abgase abführen.

Figur 4 zeigt die kalte Seite 24 des Brennerkörpers 9 von unten mit den umlaufenden Seitenkanalverschlüssen 17, den Gaszufuhrzeilen 25, den Abgasabfuhrzeilen 26, den zu den entsprechenden Zeilen zusammengefaßten Gaszufuhrkanälen 20 und Abgasabfuhrkanälen 21 und der Isolierung 13.

Figur 5 erläutert die Gasführung innerhalb des Brennerkörpers 9 in die Brennkammer 12 mit sich periodisch abwechselnden Gaszufuhrkanälen 20 und benachbarten Abgasabfuhrkanälen 21 in einem Schnitt durch den Brennerkörper 9, wobei in diesem Fall über die Gaszufuhrkanäle 20 ein Brennstoff-Luft-Gemisch aus der Mischkammer 15 in die Brennkammer 12 geführt wird, das von den heißen Abgasen in den Abgaskanälen 21 vorgewärmt wird. Auch in diesem Fall sind die entsprechenden Kanäle zu Zeilen gleicher Funktion zusammengefaßt.

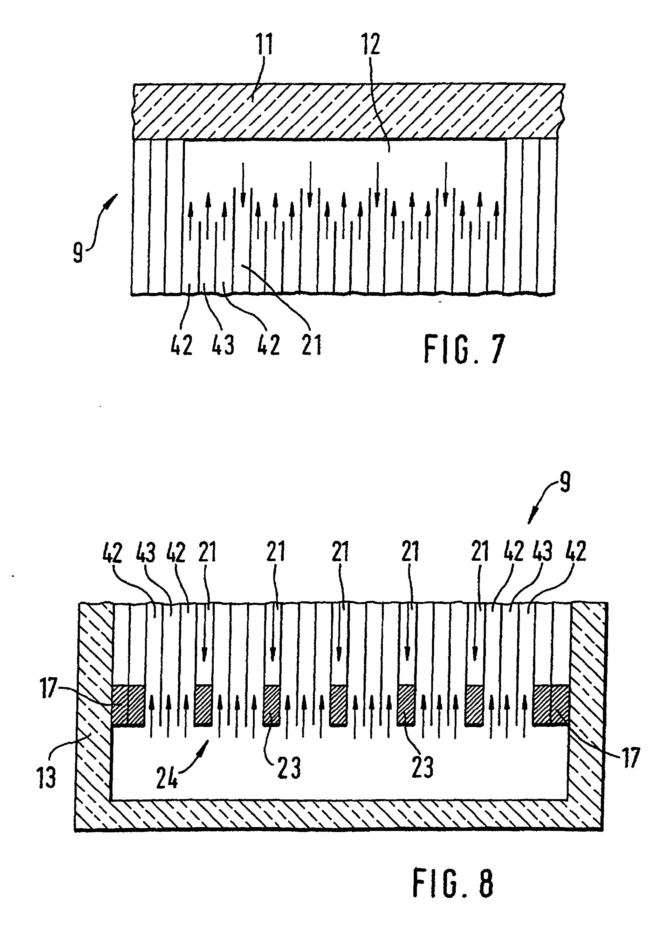

Figur 6 erläutert eine weitere Ausführungsform des Brenners 5, wobei in diesem Fall innerhalb des Brennerkörpers 9 voneinander separierte Luftzufuhrkanäle 42 und Brennstoffzufuhrkanäle 43 vorliegen, die über separate Gaszuführungen ansteuerbar sind, so daß eine Mischkammer 15 entsprechend Figur 1 oder 2 entfallen kann. Daneben sind weiterhin auch Abgasabfuhrkanäle 21 vorgesehen. Die Vermischung von Brennstoff und Luft erfolgt in diesem Fall erst in der Brennkammer 12. Die Anordnung der einzelnen Kanäle erfolgt auch in diesem Fall in Form von Zeilen gleicher Funktion, das heißt zu Abgasabfuhrzeilen 26, Luftzufuhrzeilen und Brennstoffzufuhrzeilen, wobei die Abgaszufuhrzeilen analog der Ausführung gemäß Figur 3 auf der kalten Seite 24 des Brennerkörpers 9 zurückversetzt und über Abgasöffnungen 22 mit der Abgasleitung 14 verbunden sind. Die Anordnung der Gaskanäle erfolgt dabei so, daß eine Brennstoffzufuhrzeile links und rechts von einer Luftzufuhrzeile benachbart ist, und eine Abgaszufuhrzeile 26 links und rechts von einer Luftzufuhrzeile benachbart ist, so daß sich im Schnitt eine periodische Kanalabfolge: Luftzufuhrkanal 42, Brennstoffzufuhrkanal 43, Luftzufuhrkanal 42, Abgasabfuhrkanal 21 ergibt. In den Randbereichen ist diese Periodizität unterbrochen, so daß die Randkanäle Luftzufuhrkanäle sind. Da die Luftzufuhrkanäle unter höherem Druck stehen als die Abgasabfuhrkanäle und die Brennstoffzufuhrkanäle wird durch die Anordnung ein Verlust von Brennstoffen durch Übertritt in die Abgaskanäle 21 vermieden, wenn der Brennerkörper 9 porös ist.

Figur 7 erläutert eine weitere Ausführungsform des Brenners 5, wobei die Anordnung der Kanäle und der sonstige Aufbau des Brennerkörpers 9 völlig analog Figur 6 ist, jedoch mit dem Unterschied, daß die Abgasabfuhrkanäle 21 etwas in die Brennkammer 12 hineinragen. Dies wird beispielsweise durch ein nachträgliches Abfräsen der Luftzufuhrkanäle 42 und Brennstoffzufuhrkanäle 43 erreicht oder durch eine entsprechende Formgebung bei der Herstellung des Brennerkörpers 9.

Figur 8 zeigt die kalte Seite 24 des Brennerkörpers 9 mit einer Gaszuführung entsprechend Figur 6 oder 7, wobei der Schnitt durch den Brennerkörper 9 in einer um 90° versetzten Schnittebene im Vergleich zu den Schnittebenen aus Figur 1 oder 2 erfolgte. Damit sind die ebenfalls in Form von Zeilen angeordneten Abgaskanalverschlüsse 23 deutlich erkennbar, so daß die Abgase in einer zur Zeichenebene senkrechten Richtung über Abgasöffnungen 22 abgeführt werden. Aus Gründen der Übersichtlichkeit wurde auf die Darstellung eines an sich bekannten Gaszufuhrsystems verzichtet, das erläutert, wie die Luftzufuhrkanäle 42, angeordnet in Luftzufuhrzeilen, und die Brenstoffzufuhrkanäle, angeordnet in Brennstoffzufuhrzeilen, angesteuert werden, ohne daß es vor Eintritt in die entsprechenden Kanäle zu einer Mischung dieser Gase kommt. Dies ist beispielsweise durch eine entsprechende Maske einfach realisierbar.

Figur 9 zeigt die kalte Seite 24 des Brennerkörpers 9 perspektivisch von unten analog Figur 4, wobei hier in den Gaszufuhrkanälen 20 ein in der Mischkammer 15 vorbereitetes Brennstoff-Luft-Gemisch zugeführt wird.

Die Figuren 10 und 11 zeigen eine Prinzipskizze eines Brenners 5 als Strahlungsbrenner mit weiteren Details. Innerhalb der Brennkammer 12 ist zur Zündung des Brennstoff-Luft-Gemisches eine Zündvorrichtung 32 vorgesehen, die beispielsweise piezoelektrisch oder nach dem Prinzip einer Zündkerze über eine Hochspannungsentladung arbeitet. Weiterhin verlaufen die Abgasleitungen 14 innerhalb der Abgasabführung 31. Der Brennerkörper 9 ist mit der Mischkammer 15, den Gaszuleitungen 16, der Brennkammer 12 und der Quarzglasplatte 11 in einem Gehäuse 33 befestigt, wobei ein gasdichter Abschluß der Brennkammer 12 zu der Quarzglasplatte 11 über zwei seitlich angebrachte Halterungen 30 in Form von Stäben erfolgt, die gegenüber der Quarzglasplatte thermisch isoliert sind.

Zur weiteren Konkretisierung der Ausführungsbeispiele werden im folgenden mögliche Ausführungen des Brenners 5 weiter im Detail beschrieben. Bei allen diesen Ausführungsbeispielen ist gemeinsam, daß der Brennerkörper 9 in Form eines keramischen Wabenkörpers 10 ausgebildet ist, in den die Brennkammer 12 integriert ist, und der auf der heißen Seite durch eine Quarzglasplatte 11 abgedeckt ist, so daß der Brenner 5 sowohl als Strahlungsbrenner als auch in einem thermophotovoltaischen Generator eingesetzt werden kann. Typische Dimensionen des Brennerkörpers 9 sind eine Grundfläche von ca. 150 x 150 mm und eine Höhe von ca. 300 mm. Der Brennerkörper 9 ist dabei von rechteckigen oder quadratischen, schachbrettartig angeordneten parallelen Kanälen durchzogen, die nur durch dünne Wände voneinander getrennt sind und die eine typische Querschnittsfläche von ca. 1 x 1 mm bis 2 x 2 mm aufweisen. Der erfindungsgemäße Brenner ist jedoch nicht an diese Dimensionen gebunden, sondern kann auch größer oder kleiner mit einem entsprechend dimensionierten Wabenkörper 10 ausgeführt sein. Als typischer Brennstoff dient in allen Fällen Methan, es kommen jedoch eine Vielzahl an sich bekannter Brenngase ebenfalls in Frage. Durch die Bauart des Brenners 5 und des Brennerkörpers 9 stellt sich bei Betrieb, abhängig von der Art und Menge an zugeführten Brennstoffen und Verbrennungsluft, eine typische Temperatur von etwa 1100°C bis 1300°C in einer sogenannten Strahlungszone ein, die sich im oberen Bereich des Brennerkörpers 9 befindet. Die kalte Seite 24 des Brennerkörpers 9 weist dagegen, in Abhängigkeit von der Höhe des Brennerkörpers 9 und damit der für den Wärmeaustausch zur Verfügung stehenden Strecke, eine typische Temperatur von lediglich 60°C bis 200°C auf, so daß der sich ergebende Temperaturgradient um 1000°C liegt. Als Material für den keramischen Wabenkörper 10 als Brennerkörper 9 eignet sich besonders Aluminiumoxid (Al₂O₃). Weiterhin kommen SiN, Cordierit (Mg₂Al₄Si₅O₁₈), TiN, TiO₂, SiC, ZrO₂ und andere, temperaturstabile und chemisch nicht reaktive keramische Werkstoffe in Frage. Der typische Wirkungsgrad des Brenners 5 bei Verwendung als Strahlungsbrenner liegt bei ca. 80% bis 95% d.h. 80% bis 95% der zugeführten chemischen Energie werden in Strahlung umgewandelt.

### Beispiel 1:

Ausführung des Brennerkörpers 9 als monolithischer keramischer Wabenkörper 10 aus Cordierit mit Gaszufuhrkanälen 20 und Abgasabfuhrkanälen 21 gemäß Figur 1 bis 5 sowie Figur 9 bis 11, wobei der keramische Wabenkörper eine homogene, hohe Porosität von ca. 30% offener Porosität aufweist und die Gasführung (Zufuhr eines Brennstoff-Luft-Gemisches aus der Mischkammer 15) entsprechend Figur 5 in Abgasabfuhrkanälen 21 und Gaszufuhrkanälen 20 erfolgt, die in periodisch angeordneten, sich abwechselnden Gaszufuhrzeilen 25 und Abgasabfuhrzeilen 26 angeordnet sind.

### Beispiel 2:

Ausführung des Brennerkörpers 9 als monolithischer keramischer Wabenkörper 10 aus Cordierit mit Gaszufuhrkanälen 20 und Abgasabfuhrkanälen 21 gemäß Figur 1 bis 5 sowie Figur 9 bis 11, wobei der keramische Wabenkörper eine kontinuierlich von der Brennkammer 12 bis zu der kalten Seite 24 abnehmende Porosität aufweist, die von ca. 30% offener Porosität in der Umgebung der Brennkammer 12 bis zu ca. 0 % offener Porosität (d.h. gasdicht) reicht. Die kontinuierlich abnehmende Porosität wird dadurch erreicht, daß der Brennerkörper 9 bei der Herstellung aus einem keramischen Grünkörper als Funktion der Entfernung von der Brennkammer unterschiedliche Zusammensetzungen aufweist, was über eine sich ändernde Zugabe von Bindern, einem Lösungsmittel oder Sinteradditiven erreicht wird, so daß sich eine innerhalb des Brennerkörpers 9 unterschiedliche Porosität nach dem Sintern des Grünkörpers ergibt. Eine weitere, einfachere Möglichkeit der Veränderung der Porosität am bereits fertig gesinterten Wabenkörper 10 ist das nachträgliche gezielte Verschließen von bestehenden Poren. Dazu wird der Wabenkörper 9 zunächst mit einer homogenen offenen Porosität von beispielsweise ca. 30% hergestellt und anschließend in einem Bad mit einer Flüssigkeit oder einem Sol aus keramischen Precursoren definierter Viskosität getränkt, indem man ihn beispielsweise kurzzeitig eintaucht und dann mit definierter Ziehgeschwindigkeit aus dem Sol herauszieht, wobei insbesondere der Bereich der Brennkammer 12 nur kurzzeitig im dem Sol verbleibt oder gar nicht eingetaucht wird. Anschließend wird der Wabenkörper 9 dann erneut gesintert, wobei sich auf den Wänden der Kanäle innerhalb des Brennerkörpers 9 abgeschiedenes Sol zunächst zu einem Gel und dann zu einer Keramik umwandelt, die offene Poren in den Wänden zwischen den Kanälen je nach Menge an anhaftendem oder eingebrachtem Sol verschließt (Sol-Gel-Verfahren).

Alternativ kann der Wabenkörper auch in einen dünnflüssigen keramischen Schlicker eingetaucht werden, so daß dieser Schlicker ebenfalls über die Zeitdauer des Eintauchens, die Viskosität des Schlickers und die Ziehgeschwindigkeit beim Herausziehen des Wabenkörpers aus dem Schlicker bestehende Poren innerhalb des Wabenkörpers 9 als Funktion der Entfernung von der Brennkammer 9 teilweise oder ganz verschließt. Nach diesem Tauchen bzw. Tränken ist ebenfalls ein erneutes Sintern des Wabenkörpers 10 erforderlich.

### Beispiel 3:

Ausführung des Brennerkörpers 9 als keramischer Wabenkörper 10 aus Cordierit mit Gaszufuhrkanälen 20 und Abgasabfuhrkanälen 21 gemäß Figur 1 bis 5 sowie Figur 9 bis 11. Dabei besteht der Wabenkörper aus zwei unterschiedlichen keramischen Materialien in Form von zwei aufeinandergesetzten Körpern oder einem monolithischen keramischen Körper mit unterschiedlicher Zusammensetzung in zwei verschiedenen Zonen. Im einzelnen besteht der Wabenkörper 9 dazu aus einem zweiten keramischen Material in der Umgebung der Brennkammer 12, in dem der Temperaturgradient besonders groß ist (beispielsweise oberes Drittel des Brennerkörpers 9) und das daher eine hohe offene Porosität von ca. 30% aufweist, und einem ersten keramischen Material, das sich an das zweite keramische Material anschließt und bis zur kalten Seite des Brennerkörpers 9 reicht. Das erste keramische Material ist gasdicht. Die Gasführung erfolgt dabei entsprechend Figur 5.

### Beispiel 4:

Ausführung des keramischen Wabenkörpers gemäß Beispiel 3, wobei das erste keramische Material Cordierit und das zweite keramische Material Ytterbiumoxid ist. Oberhalb der Quarzglasplatte 11 sind weiterhin zusätzlich zum Einsatz als thermophotovoltaischer Generator beispielsweise Siliziumphotozellen angebracht.

### Beispiel 5:

Ausführung des Brennerkörpers 9 gemäß den Beispielen 2, 3 oder 4, wobei die Gaszufuhrkanäle 20 in voneinander separierte Luftzufuhrkanäle 42 und Brennstoffzufuhrkanäle 43 unterteilt sind. Die Gasführung erfolgt gemäß Figur 6 und Figur 8. Eine Mischkammer 15 ist in diesem Fall nicht erforderlich. Innerhalb der Luftzufuhrkanäle 42 herrscht zur weitgehenden Vermeidung von Übertritt von Brennstoff in die Luftzufuhrkanäle 42 ein höherer Druck als in den Brennstoffzufuhrkanälen 43.

### Beispiel 6:

Ausführung des Brennerkörpers 9 gemäß den Beispielen 2, 3 oder 4, wobei die Gaszufuhrkanäle 20 in voneinander separierte Luftzufuhrkanäle 42 und Brennstoffzufuhrkanäle 43 unterteilt sind. Die Gasführung erfolgt gemäß Figur 7 und Figur 8. Dazu ragen die Abgasabfuhrkanäle 21 weiter in die Brennkammer 12 hinein als die Gaszufuhrkanäle 42, 43. Eine Mischkammer 15 ist in diesem Fall ebenfalls nicht erforderlich.

In den erläuterten Ausführungsbeispielen ist die Brennkammer 12 jeweils in den Brennerkörper 9 eingelassen oder ausgefräst worden. Es ist jedoch offensichtlich, daß die Brennkammer 12 auf der heißen Seite des Brennerkörpers 9 auch dadurch gebildet werden kann, daß der keramische Wabenkörper 10 als Quader ohne Ausfräsung ausgebildet ist, der von der Isolierung 13 umgeben und derart in den Brenner 5 eingesetzt ist, daß sich zwischen dem keramischen Wabenkörper 10 und der Quarzglasplatte 11 ein Hohlraum als Brennkammer 12 ergibt, der seitlich von der Isolierung 13 umschlossen und abgedichtet wird.

Eine weitere Ausführungsform des Brenners 5 in Abänderung der erläuterten Ausführungsbeispiele sieht vor, daß die Gaszufuhrkanäle 20 lediglich zur Verbrennungsluftzufuhr als Luftzufuhrkanäle 42 verwendet werden, während der eigentliche Brennstoff in Form von reinem Methan über eine zusätzliche Gaszufuhr direkt in die Brennkammer 12 geleitet wird. In dieser Ausführungsform erfolgt über die Abgaswärmerückgewinnung im keramischen Wabenkörper 10 keine Vorwärmung des eigentlichen Brennstoffes oder eines Brennstoff-Luft-Gemisches, sondern lediglich der reinen Verbrennungsluft. Da jedoch das für die Verbrennung benötigte Verhältnis von Luft zu Methan ca. 10:1 beträgt, ist dies für den Wirkungsgrad des Brenners 5 von untergeordneter Bedeutung.

## Patentansprüche

1. Brenner mit einem Brennerkörper (9), insbesondere aus keramischem Material, und einer Brennkammer (12), wobei der Brennerkörper (9) Kanäle fiir eine Gaszufuhr zu der Brennkammer (12) und einer Abgasabfuhr von der Brennkammer (12) aufweist und mit einer Abgaswärmerückgewinnung nach dem Prinzip eines Gegenstromwärmetauschers versehen ist, wobei die Kanäle für die Gaszufuhr und für die Abgasabfuhr innerhalb des Brennerkörpers (9) angeordnet sind und als zu der Brennkammer (12) hin verlaufende Gaszufuhrkanäle (20) und von der Brennkammer (12) weg verlaufende Abgasabfuhrkanäle (21) ausgebildet sind, **dadurch gekennzeichnet, daß** die Gaszufuhrkanäle (20) und die Abgasabfuhrkanäle (21) jeweils in einer Abfolge von Zeilen als Gaszufuhrzeile (25) und Abgasabfuhrzeile (26) abwechselnd nebeneinander angeordnet sind.

2. Brenner nach Anspruch 1, **dadurch gekennzeichnet, daß** die innerhalb des Brennerkörpers (9) von der Brennkammer (12) zu einer kalten Seite (24) des Brenners (5) verlaufenden Gaszufuhrkanäle (20, 42, 43) und Gasabfuhrkanäle (21) schachbrettartig angeordnet sind und parallel verlaufen.

3. Brenner nach Anspruch 1 oder 2, **dadurch gekennzeichnet, daß** über die Gaszufuhrkanäle (20) ein Brennstoff-Luftgemisch in die Brennkammer (12) zuführbar ist.

4. Brenner nach Anspruch 1 oder 2, **dadurch gekennzeichnet, daß** die Gaszufuhrkanäle (20, 42, 43) in Luftzufuhrkanäle (42) und Brennstoffzufuhrkanäle (43) unterteilt sind.

5. Brenner nach Anspruch 1, **dadurch gekennzeichnet, daß** die Luftzufuhrkanäle (42) und die Brennstoffzufuhrkanäle (43) sowie die Abgasabfuhrkanäle (21) in einer Abfolge von Zeilen nebeneinander angeordnet sind, so daß die Brennstoffzufuhrkanäle (43) innerhalb einer Brennstoffzufuhrzeile und die Abgasabfuhrkanäle (21) innerhalb einer Abgasabfuhrzeile (26) - abgesehen von Randbereichen der Brennerkörpers (9) - jeweils zwei benachbarte Luftzufuhrkanäle (42), angeordnet in Form von Luftzufuhrzeilen, aufweisen.

6. Brenner nach Anspruch 5, **dadurch gekennzeichnet, daß** die Abgasabfuhrkanäle (21) weiter als die Luftzufuhrkanäle (42) und/oder die Brennstoffzufuhrkanäle (43) oder die Gaszufuhrkanäle (20) in die Brennkammer (12) hineinragen.

7. Brenner nach Anspruch 1, **dadurch gekennzeichnet, daß** die Gaszufuhrkanäle (20) und die Abgasabfuhrkanäle (21) gegeneinander weitgehend gasdicht sind.

8. Brenner nach Anspruch 1, **dadurch gekennzeichnet, daß** der Brennerkörper (9) zumindest im Bereich der Brennerkammer (12) porös ist.

9. Brenner nach Anspruch 1, **dadurch gekennzeichnet, daß** der Brennerkörper (9) aus einem keramischen Material besteht, das im Bereich der Brennkammer (12) hochporös ist und das im Bereich der kalten Seite (24) gasdicht ist.

10. Brenner nach Anspruch 9, **dadurch gekennzeichnet, daß** der Brennerkörper (9) eine von der Brennkammer (12) zu der kalten Seite (24) kontinuierlich abnehmende Porosität aufweist.

11. Brenner nach Anspruch 1, **dadurch gekennzeichnet, daß** der Brennkörper (9) aus mindestens zwei verschiedenen keramischen Materialien besteht und insbesondere im Bereich der kalten Seite (24) aus einem ersten keramischen Material und im Bereich der Brennkammer (12) aus einem zweiten keramischen Material besteht.

12. Brenner nach Anspruch 11, **dadurch gekennzeichnet, daß** das zweite keramische Material ein Oxid eines Seltenerdelementes, insbesondere Yb₂O₃ oder Er₂O₃ enthält.

13. Brenner nach Anspruch 11, **dadurch gekennzeichnet, daß** die Zusammensetzung des Brennkörpers kontinuierlich von dem ersten keramischen Material zu dem zweiten keramischen Material übergeht.

14. Brenner nach Anspruch 11, **dadurch gekennzeichnet, daß** das erste keramische Material nahezu gasdicht und das zweite keramische Material hochporös ist.

15. Brenner nach Anspruch 11, **dadurch gekennzeichnet, daß** das zweite keramische Material ein frequenzselektiv strahlendes Material ist.

16. Verwendung des Brenners nach mindestens einem der vorangehenden Ansprüche als Strahlungsbrenner oder in einem thermophotovoltaischen Generator.

## Claims

1. Burner having a burner body (9), in particular made from ceramic material, and a combustion chamber (12), the burner body (9) having passages for supplying gas to the combustion chamber (12) and an exhaust-gas discharge from the combustion chamber (12) and being provided with an exhaust-gas heat recovery means operating according the principle of a countercurrent heat exchanger, the passages for supplying gas and for discharging exhaust gas being arranged inside the burner body (9) and being designed as gas supply passages (20), which run towards the combustion chamber (12), and exhaust-gas discharge passages (21), which run away from the combustion chamber (12), **characterized in that** the gas supply passages (20) and the exhaust-gas discharge passages (21) are in each case arranged adjacent to one another in an alternating sequence of rows as gas supply row (25) and exhaust-gas discharge row (26).

2. Burner according to Claim 1, **characterized in that** the gas supply passages (20, 42, 43) and gas discharge passages (21) which run inside the burner body (9) from the combustion chamber (12) to a cold side (24) of the burner (5) are arranged in a chessboard-like formation and run parallel to one another.

3. Burner according to Claim 1 or 2, **characterized in that** a fuel-air mixture can be fed into the combustion chamber (12) via the gas supply passages (20).

4. Burner according to Claim 1 or 2, **characterized in that** the gas supply passages (20, 42, 43) are divided into air supply passages (42) and fuel supply passages (43).

5. Burner according to Claim 1, **characterized in that** the air supply passages (42) and the fuel supply passages (43) and the exhaust-gas discharge passages (21) are arranged next to one another in a sequence of rows, so that the fuel supply passages (43) within one fuel supply row and the exhaust-gas discharge passages (21) within one exhaust-gas discharge row (26) - apart from edge regions of the burner body (9) - each have two adjacent air supply passages (42), arranged in the form of air supply rows.

6. Burner according to Claim 5, **characterized in that** the exhaust-gas discharge passages (21) project further into the combustion chamber (12) than the air supply passages (42) and/or the fuel supply passages (43) or the gas supply passages (20).

7. Burner according to Claim 1, **characterized in that** the gas supply passages (20) and the exhaust-gas discharge passages (21) are substantially gastight with respect to one another.

8. Burner according to Claim 1, **characterized in that** the burner body (9) is porous at least in the region of the combustion chamber (12).

9. Burner according to Claim 1, **characterized in that** the burner body (9) consists of a ceramic material which is highly porous in the region of the combustion chamber (12) and is gastight in the region of the cold side (24).

10. Burner according to Claim 9, **characterized in that** the burner body (9) has a porosity which decreases continuously from the combustion chamber (12) towards the cold side (24).

11. Burner according to Claim 1, **characterized in that** the burner body (9) consists of at least two different ceramic materials, and in particular consists of a first ceramic material in the region of the cold side (24) and of a second ceramic material in the region of the combustion chamber (12).

12. Burner according to Claim 11, **characterized in that** the second ceramic material contains an oxide of a rare earth, in particular Yb₂O₃ or Er₂O₃.

13. Burner according to Claim 11, **characterized in that** the composition of the burner body merges continuously from the first ceramic material into the second ceramic material.

14. Burner according to Claim 11, **characterized in that** the first ceramic material is virtually gastight and the second ceramic material is highly porous.

15. Burner according to Claim 11, **characterized in that** the second ceramic material is a material which radiates in a frequency-selective manner.

16. Use of the burner according to at least one of the preceding claims as a radiation burner or in a thermophotovoltaic generator.

## Revendications

1. Brûleur comportant un corps de brûleur (9), notamment en matière céramique, et une chambre de combustion (12), dans laquelle le corps du brûleur (9) présente des canaux pour une arrivée des gaz dans la chambre de combustion (12) et pour une évacuation des gaz d'échappement de la chambre de combustion (12) ainsi qu'une récupération de la chaleur des gaz brûlés suivant le principe d'un échangeur thermique à contre-courant dans lequel les canaux pour l'arrivée des gaz et l'évacuation des gaz d'échappement sont disposés à l'intérieur du corps du brûleur (9) sous forme de canaux d'arrivée des gaz (20) allant vers la chambre de combustion (12) et de canaux d'évacuation des gaz d'échappement (21) partant de la chambre de combustion (12),
**caractérisé en ce que**
les canaux d'arrivée des gaz (20) et les canaux d'évacuation des gaz d'échappement (21) sont disposés les uns après les autres par rangées alternatives d'arrivée des gaz (25) et d'évacuation des gaz d'échappement (26).

2. Brûleur selon la revendication 1,
**caractérisé en ce que**
les canaux d'arrivée des gaz (20, 42, 43) et d'évacuation des gaz (21) circulant dans le corps du brûleur (9), de la chambre de combustion (12) vers une partie froide (24) du brûleur (5), sont disposés en échiquier et circulent en parallèle.

3. Brûleur selon la revendication 1 ou 2,
**caractérisé en ce qu'**
un mélange air/carburant peut être amené dans la chambre de combustion (12) via les canaux d'arrivée des gaz (20).

4. Brûleur selon la revendication 1 ou 2,
**caractérisé en ce que**
les canaux d'arrivée des gaz (20, 42, 43) se divisent en canaux d'alimentation d'air (42) et en canaux d'alimentation de carburant (43).

5. Brûleur selon la revendication 1,
**caractérisé en ce que**
les canaux d'alimentation d'air (42), les canaux d'alimentation de carburant (43) et les canaux d'évacuation des gaz d'échappement (21) sont disposés en rangée les uns à la suite des autres de manière à ce que les canaux d'alimentation de carburant (43) dans une rangée d'alimentation de carburant et les canaux d'évacuation des gaz d'échappement (21) dans une rangée d'évacuation des gaz d'échappement (26) [excepté sur les zones de délimitation du corps du brûleur (9)] présentent à chaque fois deux canaux d'alimentation d'air situés à proximité (42) disposés sous forme de rangées d'alimentation d'air.

6. Brûleur selon la revendication 5,
**caractérisé en ce que**
les canaux d'évacuation des gaz d'échappement (21) s'encastrent davantage dans la chambre de combustion (12) que les canaux d'alimentation d'air (42) et/ou les canaux d'alimentation de carburant (43) ou les canaux d'arrivée des gaz (20).

7. Brûleur selon la revendication 1,
**caractérisé en ce que**
les canaux d'arrivée des gaz (20) et les canaux d'évacuation des gaz d'échappement (21) sont l'un l'autre largement imperméables aux gaz.

8. Brûleur selon la revendication 1,
**caractérisé en ce que**
le corps du brûleur (9) est poreux au moins dans la zone de la chambre de combustion (12).

9. Brûleur selon la revendication 1,
**caractérisé en ce que**
le corps du brûleur (9) se compose d'une matière céramique extrêmement poreuse dans la zone de la chambre de combustion (12) et imperméable aux gaz dans la zone de la partie froide (24).

10. Brûleur selon la revendication 9,
**caractérisé en ce que**
le corps du brûleur (9) présente une porosité qui augmente de manière continue de la chambre de combustion (12) à la partie froide (24).

11. Brûleur selon la revendication 1,
**caractérisé en ce que**
le corps du brûleur (9) se compose d'au moins deux matières céramiques différentes et notamment d'une première matière céramique dans la zone de la partie froide (24) et d'une deuxième matière céramique dans la zone de la chambre de combustion (12).

12. Brûleur selon la revendication 11,
**caractérisé en ce que**
la deuxième matière céramique comprend un oxyde rare du sol, notamment du Yb₂O₃ ou du Er₂O₃.

13. Brûleur selon la revendication 11,
**caractérisé en ce que**
la composition du corps du brûleur passe de manière continue de la première matière céramique à la deuxième.

14. Brûleur selon la revendication 11,
**caractérisé en ce que**
la première matière céramique est quasiment imperméable aux gaz alors que la deuxième matière céramique est très poreuse.

15. Brûleur selon la revendication 11,
**caractérisé en ce que**
la deuxième matière céramique est une matière rayonnante sélective en fréquence.

16. Utilisation du brûleur selon au moins l'une des revendications précédentes en tant que brûleur radiant ou dans un générateur thermo-photo-voltaïque.
